# EUROPEAN PATENT SPECIFICATION

(11) **EP 4 528 241 B1**
(45) Date of publication and mention of the grant of the patent: **18.11.2026**
(21) Application number: 23198177.0
(22) Date of filing: 19.09.2023
(51) Int. Cl.: G01K 13/08, H02K 11/25, G01K 1/024, H02K 11/20, H02K 11/35

(54) **DATA ACQUISITION ASSEMBLY FOR ELECTRIC MACHINE CONFIGURATION, AND ELECTRIC MACHINE CONFIGURATION COMPRISING THE SAME**
DATENERFASSUNGSANORDNUNG ZUR KONFIGURATION EINER ELEKTRISCHEN MASCHINE UND KONFIGURATION EINER ELEKTRISCHEN MASCHINE DAMIT
ENSEMBLE D'ACQUISITION DE DONNÉES POUR CONFIGURATION DE MACHINE ÉLECTRIQUE, ET CONFIGURATION DE MACHINE ÉLECTRIQUE LE COMPRENANT

(43) Date of publication of application: 26.03.2025
(73) Proprietor: ABB SCHWEIZ AG, 5400 Baden (CH)
(72) Inventor: Danci, Alex, 65320 Vaasa (FI); Ikäheimo, Jouni, 65320 Vaasa (FI); Kepsu, Daria, 65320 Vaasa (FI)
(74) Representative: Kolster Oy Ab

(56) References cited:
- EP-A1- 4 125 190
- WO-A1-2010/136052
- DE-A1- 102018 220 676
- DE-A1- 102021 212 604

## Description

### FIELD OF THE INVENTION

The present invention relates to a data acquisition assembly for an electric machine configuration, and to the electric machine configuration comprising an electric machine and the data acquisition assembly.

### BACKGROUND OF THE INVENTION

A known data acquisition assembly comprises at least one sensor adapted for measuring at least one physical quantity relating to an electric machine, and a data acquisition device adapted to receive information from the at least one sensor. The known data acquisition assembly comprises a non-replaceable battery adapted to power the data acquisition assembly. The non-replaceable battery provides up to 15 years of low data-rate use.

One of the disadvantages associated with the above known data acquisition assembly is that the non-replaceable battery does not allow functions that require substantially more power. Therefore, increasing data rates or wireless communication range is practically not possible.

Document WO2010136052A1 discloses an energy self-sufficient electrotechnical consumer to which a component which captures electric energy emitted from an electromagnetic front stray field of an electric motor is associated. The component comprises electric current connections to which the extracted electric energy is provided for an electric energy supply. Said electrotechnical consumer comprises on its side electric current connections for the supply of current, which are connected to the electric current connections of the component to ensure the supply of current.

Document DE102018220676A1 discloses a rotor of an electric motor, the rotor comprising a base body having a plurality of poles, each with at least one recess in the base body, in which a permanent magnet is mounted, wherein the rotor has at least one temperature sensor mounted in one of the recesses with a printed circuit board on which at least one measuring unit and at least one energy supply module are mounted, and wherein the energy supply module is designed to receive electrical or magnetic or electromagnetic fields. The energy supply module is arranged in a pocket adjacent to at least one recess.

### BRIEF DESCRIPTION OF THE INVENTION

An object of the present invention is to provide a data acquisition assembly for an electric machine configuration so as to alleviate the above disadvantage. The objects of the invention are achieved by a data acquisition assembly which is characterized by what is stated in the independent claim 1. The preferred embodiments of the invention are disclosed in the dependent claims.

The invention is based on the idea of powering the data acquisition assembly by an auxiliary coil located adjacent to a stator of an electric machine, and transferring both power from the auxiliary coil and sensor information from at least one sensor to the data acquisition device in a form of a combined signal having a frequency greater than 20kHz, wherein the data acquisition assembly comprises a coupling transformer adapted to transfer the combined signal to the data acquisition device.

An advantage of the data acquisition assembly of the invention is that the auxiliary coil is capable of providing plenty of power to devices of the data acquisition assembly, thereby enabling functions that are practically not possible in the known data acquisition assembly powered by a non-replaceable battery. Further, the coupling transformer enables high Ingress Protection Rating for the data acquisition device since both power and the sensor information is transmitted to the data acquisition device without any galvanic connection.

### BRIEF DESCRIPTION OF THE DRAWINGS

In the following the invention will be described in greater detail by means of preferred embodiments with reference to the attached drawings, in which
Figure 1 shows a connection diagram of an electric machine configuration comprising a data acquisition assembly according to an embodiment of present invention;
Figure 2 shows a combined strip element of the data acquisition assembly of Figure 1;
Figure 3 shows a simplified cross-section of an electric machine configuration comprising components shown in the connection diagram of Figure 1; and
Figure 4 shows a simplified cross-section of an electric machine configuration according to another embodiment of present invention, and comprising corresponding components as shown in the connection diagram of Figure 1.

### DETAILED DESCRIPTION OF THE INVENTION

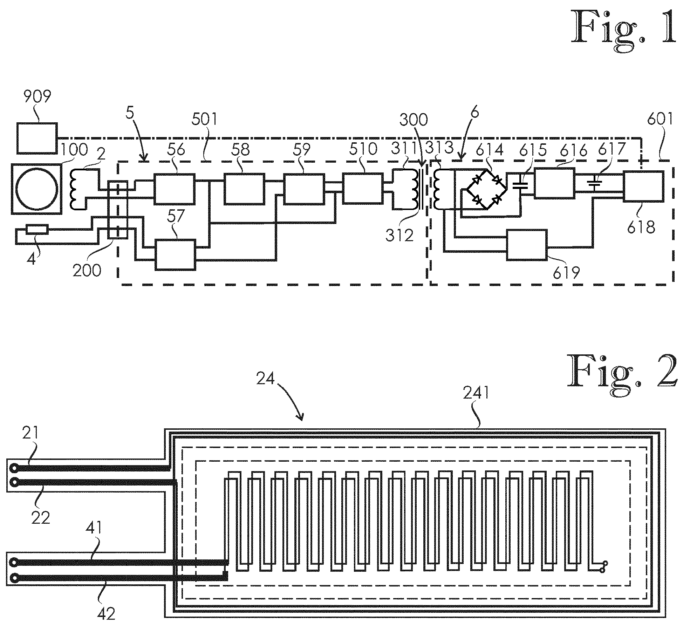

Figure 1 shows a connection diagram of an electric machine configuration comprising an electric machine 100 and a data acquisition assembly connected to the electric machine 100. The data acquisition assembly comprises an auxiliary coil 2, a sensor 4, an intermediate circuit device 5 and a data acquisition device 6. The electric machine 100 is a rotating electric machine comprising a frame, a stator immovably supported to the frame, and a rotor received in the stator, and rotatably supported to the frame.

The auxiliary coil 2 is located adjacent to the stator of the electric machine 100, and adapted to generate an auxiliary coil voltage during operation of the electric machine 100. During operation of the electric machine 100, a changing magnetic flux in the stator induces the auxiliary coil voltage in the auxiliary coil 2.

The sensor 4 comprises a temperature sensor adapted for measuring a temperature relating to the electric machine 100, and for generating sensor information based on the measured temperature. In an alternative embodiment, the sensor is adapted for measuring at least one physical quantity relating to the electric machine, and for generating sensor information based on the measured at least one physical quantity.

Both the auxiliary coil 2 and the temperature sensor are incorporated into a combined strip element 24 shown in Figure 2. In the electric machine configuration of Figure 1, the combined strip element 24 is located in an air gap of the electric machine 100. The air gap is a space between the rotor and the stator of the electric machine 100. The combined strip element 24 is adhesively mounted to an inner surface of the stator of the electric machine 100.

The combined strip element 24 has a planar and rectangular body section 241, from which wires 21 and 22 of the auxiliary coil 2, and wires 41 and 42 of the temperature sensor protrude from. A length of the rectangular body section 241 is 15cm, a width of the rectangular body section 241 is 5cm, and a thickness of the rectangular body section 241 is less than 0.1mm. In alternative embodiments, a length of the body section is in a range of 1-50cm, a width of the body section is in a range of 1-50cm, and a thickness of the body section is less than or equal to 2mm.

In Figure 2, an internal structure of the combined strip element 24 is shown as a simplified version. The combined strip element 24 comprises dozens of metres of wiring, and therefore it is not possible to depict the internal structure in real form. In alternative embodiments, amount of wiring inside the combined strip element varies from few centimetres to hundreds of meters depending on characteristics of the electric machine, the intermediate circuit device and the data acquisition device, for example.

In an embodiment, internal wiring of the combined strip element is realized as printed electronics.

The combined strip element 24 is connected to the intermediate circuit device 5 through a terminal box 200, which provides a hermetic feedthrough into a housing 501 of the intermediate circuit device 5. Signals of wires 21 and 22 of the auxiliary coil 2, and signals of wires 41 and 42 of the temperature sensor pass through a terminal box 200.

In an alternative embodiment, the auxiliary coil and the temperature sensor are separate components. In an embodiment, neither the auxiliary coil nor the temperature sensor is located in an air gap of the electric machine. For example, the auxiliary coil can be located around a portion of one of the plurality of stator teeth as discussed in European patent application EP222071771.1 which has been published as EP 4 369 569 A1.

The intermediate circuit device 5 is adapted to generate a combined signal comprising both power from the auxiliary coil 2 and sensor information from the sensor 4, and to transfer the combined signal to the data acquisition device 6. The power from the auxiliary coil 2 is provided by the auxiliary coil voltage. The intermediate circuit device 5 is adapted to transfer power from the auxiliary coil 2 to the data acquisition device 6, and to transfer sensor information from the sensor 4 to the data acquisition device 6. The intermediate circuit device 5 and the data acquisition device 6 are powered by the auxiliary coil 2.

The intermediate circuit device 5 comprises a power supply 56, a sensor circuit 57, an oscillator 58, a modulator 59 and an amplifier 510. The wires 21 and 22 of the auxiliary coil 2 are electrically connected to an input of the power supply 56.

The power supply 56 is adapted to supply regulated power through an output thereof. The output of the power supply 56 is electrically connected to the sensor circuit 57, to the oscillator 58, to the modulator 59 and to the amplifier 510.

An input of the sensor circuit 57 is communicatively connected to the wires 41 and 42 of the temperature sensor through the terminal box 200. The sensor circuit 57 is adapted to convert an output signal of the sensor 4 into a sensor circuit signal that is adapted to control the modulator 59. An output of the sensor circuit 57 is communicatively connected to an input of the modulator 59.

The oscillator 58 is adapted to generate a continuous carrier frequency greater than 20kHz. An output of the oscillator 58 is communicatively connected to an input of the modulator 59. The modulator 59 is adapted to modulate the continuous carrier frequency, and the amplifier 510 is adapted to amplify the modulated signal. An input of the amplifier 510 is communicatively connected to an output of the modulator 59. An output signal of the amplifier 510 is the combined signal.

A coupling transformer 300 is adapted to transfer the combined signal generated by the intermediate circuit device 5 to the data acquisition device 6. All communication between the sensor 4 and the data acquisition device 6, and between the intermediate circuit device 5 and the data acquisition device 6 is adapted to be carried out through the coupling transformer 300. The coupling transformer 300 comprises a primary winding 311, a secondary winding 313, and a transformer core 312.

The primary winding 311 and the secondary winding 313 have the same number of turns. Therefore, the coupling transformer 300 does not change AC voltage levels. In alternative embodiments, the coupling transformer is a step-up transformer or a step-down transformer.

The data acquisition device 6 comprises a rectifier 614, a capacitor 615, a battery charger 616, a battery 617, a smart sensor circuitry 618 and a demodulator 619. There is galvanic separation between the data acquisition device 6 and the intermediate circuit device 5. A housing 601 of the data acquisition device 6 has an Ingress Protection Rating of IP66. In an alternative embodiment, a housing of the data acquisition device has an Ingress Protection Rating of at least IP54.

Input of the rectifier 614 is electrically connected to the secondary winding 313. The rectifier 614 is adapted to rectify power received from the secondary winding 313, and to supply the rectified power to the battery charger 616. The capacitor 615 is electrically connected between the rectifier 614 and the battery charger 616, and is adapted to filter the power supplied from the rectifier 614 to the battery charger 616. The battery charger 616 is adapted to condition the power received from the rectifier 614, and to supply the conditioned power to the battery 617 for charging the battery 617. The smart sensor circuitry 618 is adapted to draw power from the battery 617 as needed.

Input of the demodulator 619 is electrically connected to the secondary winding 313. The demodulator 619 is adapted to sample a signal received from the secondary winding 313, and to extract the sensor information encoded by the modulator 59. The demodulator 619 is adapted to supply the extracted sensor information to the smart sensor circuitry 618. The smart sensor circuitry 618 is adapted to monitor condition of the electric machine 100 based on the sensor information.

In an alternative embodiment, the data acquisition assembly comprises a plurality of sensors each adapted for measuring at least one physical quantity relating to the electric machine, wherein the data acquisition device is adapted to receive information from the plurality of sensors. The smart sensor circuitry is adapted to monitor condition of the electric machine based on sensor information generated by the plurality of sensors.

The data acquisition device 6 is communicatively connected to a controller 909 and adapted to transmit information to the controller 909, wherein the information comprises the sensor information. In alternative embodiments, the information which the data acquisition device is adapted to transmit to the controller comprises at least part of the sensor information or condition monitoring information processed from the sensor information.

The controller 909 is adapted to control the electric machine 100 based on the information received from the data acquisition device 6. If the sensor information indicates that a temperature of the electric machine 100 is greater than a predetermined limit value, the controller 909 decreases power of the electric machine 100, or switches off the electric machine 100. In an alternative embodiment, the controller is adapted to utilize the information received from the data acquisition device for monitoring condition of the electric machine.

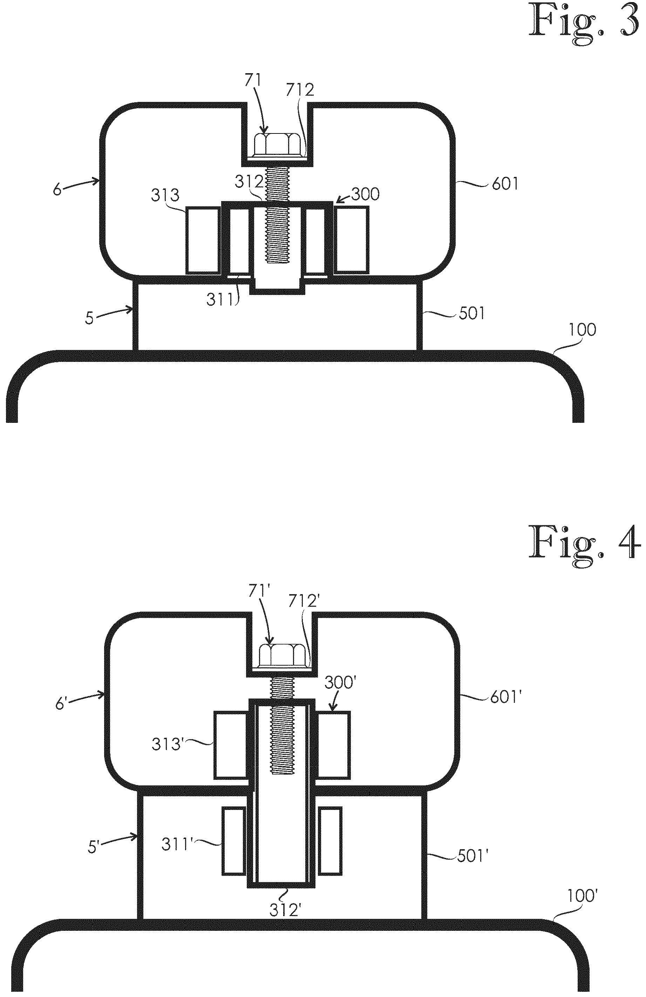

Figure 3 shows a simplified cross-section of an electric machine configuration comprising components shown in the connection diagram of Figure 1. Figure 3 shows that the primary winding 311 and the transformer core 312 are located inside the housing 501 of the intermediate circuit device 5, and the secondary winding 313 is located inside the housing 601 of the data acquisition device 6.

The primary winding 311 and the secondary winding 313 are located coaxially. The primary winding 311 is located radially inside the secondary winding 313. The primary winding 311 and the secondary winding 313 overlap in an axial direction.

The data acquisition device 6 is mechanically connected to the intermediate circuit device 5 by a bolt joint comprising a mounting bolt 71 and an internal thread provided in the transformer core 312. The housing 601 of the data acquisition device 6 has a bolt hole adapted to receive an external thread of the mounting bolt 71. The mounting bolt 71 has a collar 712 that is adapted to co-operate with a section of the housing 601 around the bolt hole for pressing the data acquisition device 6 against the intermediate circuit device 5.

Figure 4 shows a simplified cross-section of an electric machine configuration according to another embodiment of present invention, and comprising corresponding components as shown in the connection diagram of Figure 1. Figure 4 shows that the primary winding 311' and the transformer core 312' are located inside the housing 501' of the intermediate circuit device 5', and the secondary winding 313' is located inside the housing 601' of the data acquisition device 6'.

The primary winding 311' and the secondary winding 313' are located coaxially. The primary winding 311' and the secondary winding 313' are spaced apart in an axial direction.

In Figures 3 and 4, components inside the intermediate circuit device and the data acquisition device have been omitted except for components relating to the coupling transformer. Further, only a portion of the electric machine is shown.

It will be obvious to a person skilled in the art that the inventive concept can be implemented in various ways. The invention and its embodiments are not limited to the examples described above but may vary within the scope of the claims.

## Claims

1. A data acquisition assembly for an electric machine configuration comprising
an auxiliary coil (2) adapted to be located adjacent to a stator of an electric machine (100), and adapted to generate an auxiliary coil voltage during operation of the electric machine (100);
at least one sensor (4) adapted for measuring at least one physical quantity relating to the electric machine (100);
a data acquisition device (6) adapted to receive information from the at least one sensor (4); and
an intermediate circuit device (5), wherein the auxiliary coil (2) is adapted to supply power to the data acquisition device (6) through the intermediate circuit device (5), and wherein the intermediate circuit device (5) is adapted to transfer information from the at least one sensor (4) to the data acquisition device (6),
**characterized in that** the intermediate circuit device (5) is adapted to generate a combined signal comprising both power from the auxiliary coil (2) and sensor information from the at least one sensor (4), wherein a frequency of the combined signal is greater than 20kHz,
wherein the data acquisition assembly comprises a coupling transformer (300) adapted to transfer the combined signal from the intermediate circuit device (5) to the data acquisition device (6).

2. The data acquisition assembly according to claim 1, wherein all communication between the at least one sensor (4) and the data acquisition device (6), and between the intermediate circuit device (5) and the data acquisition device (6) is adapted to be carried out through the coupling transformer (300).

3. The data acquisition assembly according to claim 1 or 2, wherein the at least one sensor (4) comprises a temperature sensor.

4. The data acquisition assembly according to claim 3, wherein the data acquisition assembly comprises a combined strip element (24) having both the auxiliary coil (2) and the temperature sensor.

5. The data acquisition assembly according to claim 4, wherein the combined strip element (24) is adapted to be located in an air gap of the electric machine (100), and to be adhesively mounted to an inner surface of the stator of the electric machine (100).

6. The data acquisition assembly according to any one of the preceding claims, wherein a primary winding (311) of the coupling transformer (300) is located inside the housing (501) of the intermediate circuit device (5), and a secondary winding (313) of the coupling transformer (300) is located inside a housing (601) of the data acquisition device (6).

7. The data acquisition assembly according to any one of the preceding claims, wherein the data acquisition assembly comprises a controller (909) adapted to control the electric machine (100), wherein the data acquisition device (6) is communicatively connected to the controller (909) and adapted to transmit information to the controller (909).

8. The data acquisition assembly according to claim 7, wherein the information transmitted from the data acquisition device (6) to the controller (909) comprises at least part of the sensor information or condition monitoring information processed from the sensor information.

9. The data acquisition assembly according to claim 7 or 8, wherein the controller (909) is adapted to control the electric machine (100) based on the information received from the data acquisition device (6).

10. The data acquisition assembly according to any one of claims 7 to 9, wherein the controller (909) is adapted to utilize the information received from the data acquisition device (6) for monitoring condition of the electric machine (100).

11. An electric machine configuration comprising an electric machine (100) and the data acquisition assembly according to any one of claims 1-10.

## Patentansprüche

1. Datenerfassungsanordnung für eine Konfiguration einer elektrischen Maschine, umfassend
eine Hilfsspule (2), die dazu ausgelegt ist, sich neben einem Stator einer elektrischen Maschine (100) angeordnet zu werden, und dazu ausgelegt ist, während des Betriebs der elektrischen Maschine (100) eine Hilfsspulenspannung zu erzeugen;
mindestens einen Sensor (4), der zum Messen mindestens einer physikalischen Größe, die sich auf die elektrische Maschine (100) bezieht, ausgelegt ist;
eine Datenerfassungsvorrichtung (6), die dazu ausgelegt ist, Informationen von dem mindestens einen Sensor (4) zu empfangen; und
eine Zwischenschaltungsvorrichtung (5), wobei die Hilfsspule (2) dazu ausgelegt ist, der Datenerfassungsvorrichtung (6) über die Zwischenschaltungsvorrichtung (5) Leistung zuzuführen, und wobei die Zwischenschaltungsvorrichtung (5) dazu ausgelegt ist, Informationen von dem mindestens einen Sensor (4) an die Datenerfassungsvorrichtung (6) zu übertragen,
**dadurch gekennzeichnet, dass** die Zwischenschaltungsvorrichtung (5) dazu ausgelegt ist, ein kombiniertes Signal, das sowohl Leistung von der Hilfsspule (2) als auch Sensorinformationen von dem mindestens einen Sensor (4) umfasst, zu erzeugen, wobei eine Frequenz des kombinierten Signals größer als 20 kHz ist,
wobei die Datenerfassungsanordnung einen Kopplungstransformator (300) umfasst, der dazu ausgelegt ist, das kombinierte Signal von der Zwischenschaltungsvorrichtung (5) an die Datenerfassungsvorrichtung (6) zu übertragen.

2. Datenerfassungsanordnung nach Anspruch 1, wobei die gesamte Kommunikation zwischen dem mindestens einen Sensor (4) und der Datenerfassungsvorrichtung (6) und zwischen der Zwischenschaltungsvorrichtung (5) und der Datenerfassungsvorrichtung (6) dafür vorgesehen ist, über den Kopplungstransformator (300) ausgeführt zu werden.

3. Datenerfassungsanordnung nach Anspruch 1 oder 2, wobei der mindestens eine Sensor (4) einen Temperatursensor umfasst.

4. Datenerfassungsanordnung nach Anspruch 3, wobei die Datenerfassungsanordnung ein kombiniertes Streifenelement (24), das sowohl die Hilfsspule (2) als auch den Temperatursensor aufweist, umfasst.

5. Datenerfassungsanordnung nach Anspruch 4, wobei das kombinierte Streifenelement (24) dazu ausgelegt ist, in einem Luftspalt der elektrischen Maschine (100) angeordnet und durch Kleben an einer Innenfläche des Stators der elektrischen Maschine (100) befestigt zu werden.

6. Datenerfassungsanordnung nach einem der vorhergehenden Ansprüche, wobei sich eine Primärwicklung (311) des Kopplungstransformators (300) innerhalb des Gehäuses (501) der Zwischenschaltungsvorrichtung (5) befindet und sich eine Sekundärwicklung (313) des Kopplungstransformators (300) innerhalb eines Gehäuses (601) der Datenerfassungsvorrichtung (6) befindet.

7. Datenerfassungsanordnung nach einem der vorhergehenden Ansprüche, wobei die Datenerfassungsanordnung eine Steuerung (909) umfasst, die dazu ausgelegt ist, die elektrische Maschine (100) zu steuern, wobei die Datenerfassungsvorrichtung (6) kommunikativ mit der Steuerung (909) verbunden und dazu ausgelegt ist, Informationen an die Steuerung (909) zu übermitteln.

8. Datenerfassungsanordnung nach Anspruch 7, wobei die von der Datenerfassungsvorrichtung (6) an die Steuerung (909) übermittelten Informationen mindestens einen Teil der Sensorinformationen oder aus den Sensorinformationen verarbeitete Zustandsüberwachungsinformationen umfassen.

9. Datenerfassungsanordnung nach Anspruch 7 oder 8, wobei die Steuerung (909) dazu ausgelegt ist, die elektrische Maschine (100) basierend auf den von der Datenerfassungsvorrichtung (6) empfangenen Informationen zu steuern.

10. Datenerfassungsanordnung nach einem der Ansprüche 7 bis 9, wobei die Steuerung (909) dazu ausgelegt ist, die von der Datenerfassungsvorrichtung (6) empfangenen Informationen zum Überwachen des Zustands der elektrischen Maschine (100) zu nutzen.

11. Konfiguration einer elektrischen Maschine, die eine elektrische Maschine (100) und die Datenerfassungsanordnung nach einem der Ansprüche 1 bis 10 umfasst.

## Revendications

1. Ensemble d'acquisition de données pour une configuration de machine électrique comprenant une bobine auxiliaire (2) conçue pour être située à côté d'un stator d'une machine électrique (100), et conçue pour générer une tension de bobine auxiliaire pendant le fonctionnement de la machine électrique (100) ;
au moins un capteur (4) conçu pour mesurer au moins une grandeur physique concernant la machine électrique (100) ;
un dispositif d'acquisition de données (6) conçu pour recevoir des informations provenant dudit au moins un capteur (4) ; et
un dispositif de circuit intermédiaire (5), où la bobine auxiliaire (2) est conçue pour alimenter le dispositif d'acquisition de données (6) par l'intermédiaire du dispositif de circuit intermédiaire (5), et où le dispositif de circuit intermédiaire (5) est conçu pour transférer des informations depuis ledit au moins un capteur (4) vers le dispositif d'acquisition de données (6),
**caractérisé en ce que** le dispositif de circuit intermédiaire (5) est conçu pour générer un signal combiné comprenant à la fois de l'énergie en provenance de la bobine auxiliaire (2) et des informations de capteur en provenance de l'au moins un capteur (4), où une fréquence du signal combiné est supérieure à 20 kHz, où l'ensemble d'acquisition de données comprend un transformateur de couplage (300) conçu pour transférer le signal combiné du dispositif de circuit intermédiaire (5) au dispositif d'acquisition de données (6).

2. Ensemble d'acquisition de données selon la revendication 1, dans lequel toute communication entre l'au moins un capteur (4) et le dispositif d'acquisition de données (6), et entre le dispositif de circuit intermédiaire (5) et le dispositif d'acquisition de données (6) est conçue pour être exécutée par l'intermédiaire du transformateur de couplage (300).

3. Ensemble d'acquisition de données selon les revendications 1 ou 2, dans lequel l'au moins un capteur (4) comprend un capteur de température.

4. Ensemble d'acquisition de données selon la revendication 3, dans lequel l'ensemble d'acquisition de données comprend un élément de bande combiné (24) ayant à la fois la bobine auxiliaire (2) et le capteur de température.

5. Ensemble d'acquisition de données selon la revendication 4, dans lequel l'élément de bande combiné (24) est conçu pour être situé dans un entrefer de la machine électrique (100), et pour être monté de manière adhésive sur une surface intérieure du stator de la machine électrique (100).

6. Ensemble d'acquisition de données selon l'une quelconque des revendications précédentes, dans lequel un enroulement primaire (311) du transformateur de couplage (300) est situé à l'intérieur du boîtier (501) du dispositif de circuit intermédiaire (5), et un enroulement secondaire (313) du transformateur de couplage (300) est situé à l'intérieur d'un boîtier (601) du dispositif d'acquisition de données (6).

7. Ensemble d'acquisition de données selon l'une quelconque des revendications précédentes, dans lequel l'ensemble d'acquisition de données comprend un contrôleur (909) conçu pour commander la machine électrique (100), où le dispositif d'acquisition de données (6) est connecté en communication avec le contrôleur (909) et conçu pour transmettre des informations au contrôleur (909).

8. Ensemble d'acquisition de données selon la revendication 7, dans lequel les informations transmises du dispositif d'acquisition de données (6) au contrôleur (909) comprennent au moins une partie des informations de capteur ou des informations de surveillance d'état traitées à partir des informations de capteur.

9. Ensemble d'acquisition de données selon les revendications 7 ou 8, dans lequel le contrôleur (909) est conçu pour commander la machine électrique (100) sur la base des informations reçues du dispositif d'acquisition de données (6).

10. Ensemble d'acquisition de données selon l'une quelconque des revendications 7 à 9, dans lequel le contrôleur (909) est conçu pour utiliser les informations reçues du dispositif d'acquisition de données (6) pour surveiller l'état de la machine électrique (100).

11. Configuration de machine électrique comprenant une machine électrique (100) et l'ensemble d'acquisition de données selon l'une quelconque des revendications 1 à 10.
